# EUROPEAN PATENT SPECIFICATION

(11) **EP 1 861 190 B1**
(45) Date of publication and mention of the grant of the patent: **14.01.2009**
(21) Application number: 06718858.1
(22) Date of filing: 18.01.2006
(51) Int. Cl.: B01D 41/04, F01N 3/023

(54) **APPARATUS FOR COMBUSTING COLLECTED DIESEL EXHAUST MATERIAL FROM AFTERTREATMENT DEVICE AND METHOD**
VORRICHTUNG ZUM VERBRENNEN VON GESAMMELTEM DIESELAUSPUFFMATERIAL AUS EINER NACHBEHANDLUNGSVORRICHTUNG UND VERFAHREN
APPAREIL PERMETTANT DE BRULER LES MATIERES COLLECTEES ISSUES DES ECHAPPEMENTS DE DIESELS PROVENANT DU DISPOSITIF DE POST-TRAITEMENT DES EMISSIONS ET PROCEDE CORRESPONDANT

(30) Priority: 04.03.2005 US 658612 P
(43) Date of publication of application: 05.12.2007
(73) Proprietor: DONALDSON COMPANY, INC., Minneapolis, MN 55440-1299 (US)
(72) Inventor: WAGNER, Wayne, M., Apple Valley, MN 55124 (US); LORENZEN, Mary, Joanne, Chanhassen, MN 55317 (US); HERMAN, John, T., Rhinelander, WI 54501 (US)
(74) Representative: Speiser, Dieter K.
(86) International application number: PCT/US2006/001850
(87) International publication number: WO 2006/096244

(56) References cited:
- EP-A- 1 060 780
- EP-A- 1 252 919
- WO-A-93/03262
- WO-A-95/23280
- PATENT ABSTRACTS OF JAPAN vol. 2003, no. 12, 5 December 2003 (2003-12-05) & JP 2004 239072 A (HINO MOTORS LTD), 26 August 2004 (2004-08-26)

## Description

### Technical Field

The present invention relates generally to devices and methods for servicing/cleaning diesel particulate filters or other aftertreatment devices.

### Background

To reduce air pollution, engine exhaust emissions standards have become increasingly more stringent. Aftertreatment devices have been developed to satisfy these increasingly stringent standards. For example, catalytic converters have been used to reduce the concentration of pollutant gases (e.g., hydrocarbons, carbon monoxide, nitric oxide, etc.) exhausted by engines. With respect to diesel engines, diesel particulate filters have been used to reduce the concentration of particulate matter (e.g., soot) in the exhaust stream. U.S. Patent No. 4,851,015, discloses an example diesel particulate filter. Other example types of aftertreatment devices include lean NOx catalyst devices, selective catalytic reduction (SCR) catalyst devices, lean NOx traps, or other device for removing for removing pollutants from engine exhaust streams.

At times, it is required to service aftertreatment devices.

According to WO 93/03262 in the exhaust and muffler system of a heavy-dusty truck said system includes a regeneration apparatus including a number of trap assemblies mounted in said exhaust housing. In normal operation, exhaust gases enter said housing and subsequently enter a trap assembly, pass through it and are subsequently vented through an outlet pipe. A reversed flow device is provided along the central axis of the core of each trap. For the purpose of servicing heated oxygen-containing gas is directed towards an end of the core of said trap at a rate independent of the exhaust gas rate so as to blow a significant portion of particulate matter out of said trap. Due to the temperature of the oxygen-containing gas a substantial portion of the particulate matter remaining in the trap is burned. This way of servicing after treatment devices has the disadvantage of having to provide for each trap in the exhaust system an individual regenerating apparatus, although this apparatus is needed only infrequently.

To facilitate servicing, aftertreatment devices are often clamped into an exhaust system as modules or separate units. For example, clamps can be provided at flange interfaces located opposite adjacent opposite ends of the aftertreatment devices. By removing the end clamps, a given aftertreatment device can be removed from its corresponding exhaust system for servicing.

In use, aftertreatment devices occasionally become overloaded with soot, ash or other materials present in or generated from engine exhaust As aftertreatment devices become overloaded, the devices cause undesirable backpressure in their corresponding exhaust systems. When an aftertreatment device becomes plugged to the point where excessive backpressure is a concern, it is recommended to remove the device from its corresponding exhaust system for servicing. To service a device such as a diesel particulate filter, it is known to manually move a focused stream of pressurized air back and forth across the outlet side of the filter to loosen soot/ash that has collected on the filter. For example, a compressed air gun (e.g. 3,4 - 6.9 bar (50-100 psi)) can be used as a source of pressurized air. Simultaneously, an industrial vacuum device is coupled to the inlet side of the filter. The vacuum device is typically equipped with a thigh-efficiency particulate air filter or ultra-low penetration air falter for collecting the soot/ash that is blown from the filter by the pressurized air. Total time for cleaning the filter depends on the size of the filter, but is typically 30-50 minutes. However, the small volume of compressed air typically provided from a compressed air nozzle ca often diffuse rapidly into the porous core of the aftertreatment device thereby limiting effectiveness.

Diesel particulate filters can also be cleaned by using a heating process to combust material captured on the filters. It is known to use ovens for heating the diesel particulate filter. When heating filters in an oven, filters have been known to crack because the combustion is uncontrolled.

What is needed is an improved device/method for servicing overloaded diesel particulate filters or other exhaust aftertreatment devices.

### Summary

According to a first aspect of the present disclosure there is provided an apparatus for combusting soot from a diesel engine exhaust aftertreatment device as claimed in claim 1, the apparatus comprising a cabinet having a housing, the cabinet including a door that can be opened to provide access to an interior of the housing for removably mounting the diesel engine exhaust aftertreatment device within the housing after the diesel engine exhaust aftertreatment device has been removed from a corresponding exhaust system; a heating element positioned within the housing of the cabinet; a mounting arrangement for securing the diesel engine exhaust aftertreatment device above the heating element; and an ash collection container mounted beneath a floor of the housing for collecting ash that falls from the diesel engine exhaust aftertreatment device during heating.relate to devices and methods for efficiently and effectively combusting diesel exhaust material present on diesel particulate filters or other aftertreatment devices. Examples representative of a variety of inventive aspects are claimed in further claims and are set forth in the description that follows. The inventive aspects relate to individual features as well as combinations of features. It is to be understood that the following detailed description merely provides examples of how the inventive aspects may be put into practice, and are not intended to limit the broad spirit and scope of the claimed aspects.

### Brief Description of the Drawings

Figure 1 is a front view of an aftertreatment device regeneration cleaner having features that are examples of inventive aspects in accordance with the principles of the present disclosure;
Figure 2 is a side view of the cleaner of Figure 1;
Figure 3 is a perspective view of a vent and hood assembly of the cleaner of Figure 1;
Figure 4 is a perspective view of a heating element and ash collection container of the cleaner of Figure 1;
Figure 5 is a cross-sectional view taken along section line 5-5 of Figure 4;
Figure 6 is a perspective view of a base assembly of the cleaner of Figure 1;
Figure 7 is an end view of the base assembly of Figure 6;
Figure 8 shows an insulation layer for insulating an aftertreatment device during the heat cleaning process;
Figure 9 is a schematic diagram of a control system for an aftertreatment device regeneration cleaner having features that are examples of inventive aspects in accordance with the principles of the present disclosure;
Figure 10 is a perspective view of an aftertreatment device cleaner including the control system of Figure 9; and
Figure 11 is a transverse cross-sectional view of a aftertreatment device insulating component shown at Figure 10.

### Detailed Description

In the following detailed description, references are made to the accompanying drawings that depict various embodiments which are examples of how certain inventive aspects may be practiced. It is to be understood that other embodiments may be utilized, and structural and functional changes may be made without departing from the broad scope of the inventive aspects.

The present disclosure relates to methods and systems for efficiently and effectively cleaning diesel particulate filters (DPF) or other exhaust aftertreatment devices. In one embodiment, a cleaner includes a cabinet in which a heating element is positioned. A compressed air outlet is provided beneath the heating element. An ash collection container is mounted beneath the compressed air outlet. A hood is provided for venting the products of combustion from the cabinet. A blower or fan can be used to force air into the cabinet for facilitating venting the products of combustion through the hood. In use, a diesel particulate filter or other aftertreatment device is mounted over the heating element and the heating element is heated to start the combustion process. To promote controlled combustion, pulses of air from the compressed air outlet are directed into the region beneath the heating element. The pulses move through the diesel particulate filter or other aftertreatment device to enhance the combustion process. Air nozzles used in generating the pulses can be aimed directly at the diesel particulate filter being serviced or away from the diesel particulate filter being serviced.

Throughout the remainder of the specification, cleaning devices and methods are described primarily with respect to cleaning diesel particulate filters. However, it will be appreciated that the same devices and methods can be used to clean other types of engine exhaust aftertreatment devices as well. Other example aftertreatment devices that may require servicing include catalytic converters, lean NOx catalyst devices, selective catalytic reduction (SCR) catalyst devices, lean NOx traps, or other devices for removing for removing pollutants from the exhaust stream. The methods and cleaners can also be used to clean other types of filters/treatment devices, and are not limited exclusively to engine exhaust aftertreatment devices.

Diesel particulate filter substrates can have a variety of known configurations. An exemplary configuration includes a monolith ceramic substrate having a "honey-comb" configuration of plugged passages as described in United States patent No. 4,851,015. This type of filter can be referred to as a wall-flow trap or filter. Common materials used for wall-flow filters include silicon carbide and cordierite. Wire mesh, corrugated metal foil and other flow-through type filter configurations can also be used. In certain embodiments, the filter substrate can include a catalyst. Exemplary catalysts include precious metals such as platinum, palladium and rhodium, and other types of components such as base metals or zeolites.

As described herein, aftertreatment devices are described as having inlet sides or faces and outlet sides or faces. The inlet side or face of an aftertreatment device is the side that faces the incoming flow of exhaust when installed in an exhaust system. The inlet side can be referred to as the "dirty" side since it is the side at which material filtered from the exhaust stream collects. The outlet side or face of an aftertreatment device is the side that faces away from the incoming flow of exhaust when installed in an exhaust system. The outlet side can be referred to as the "clean" side.

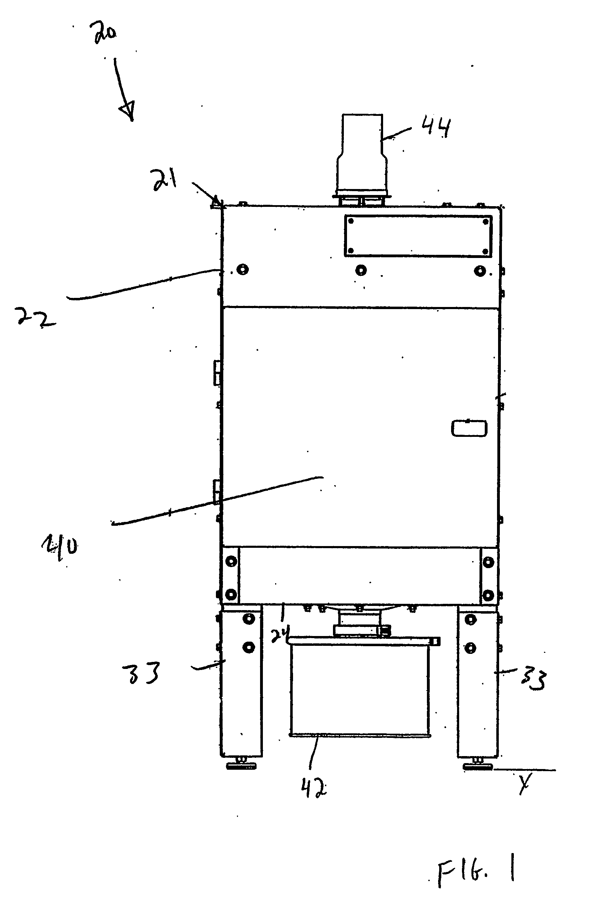

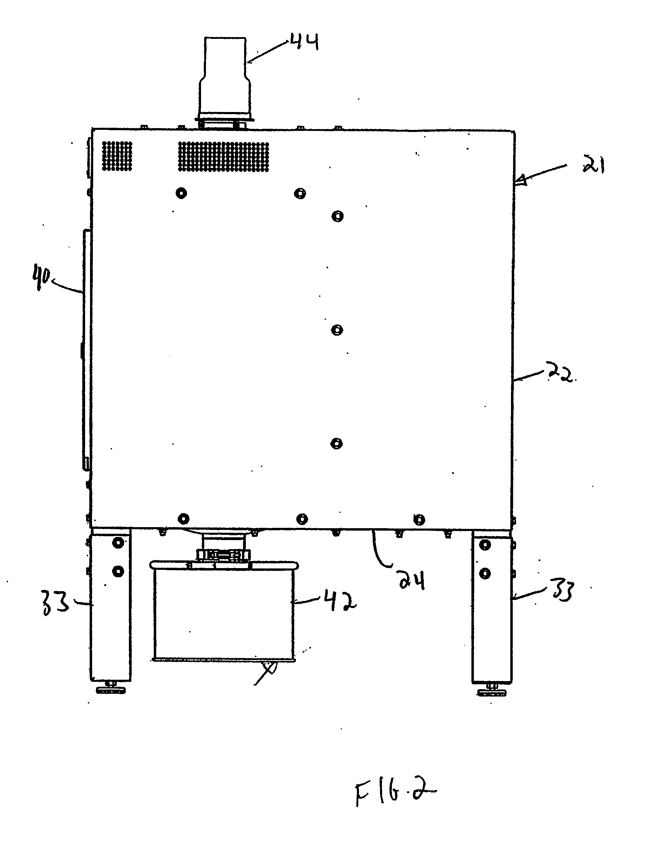

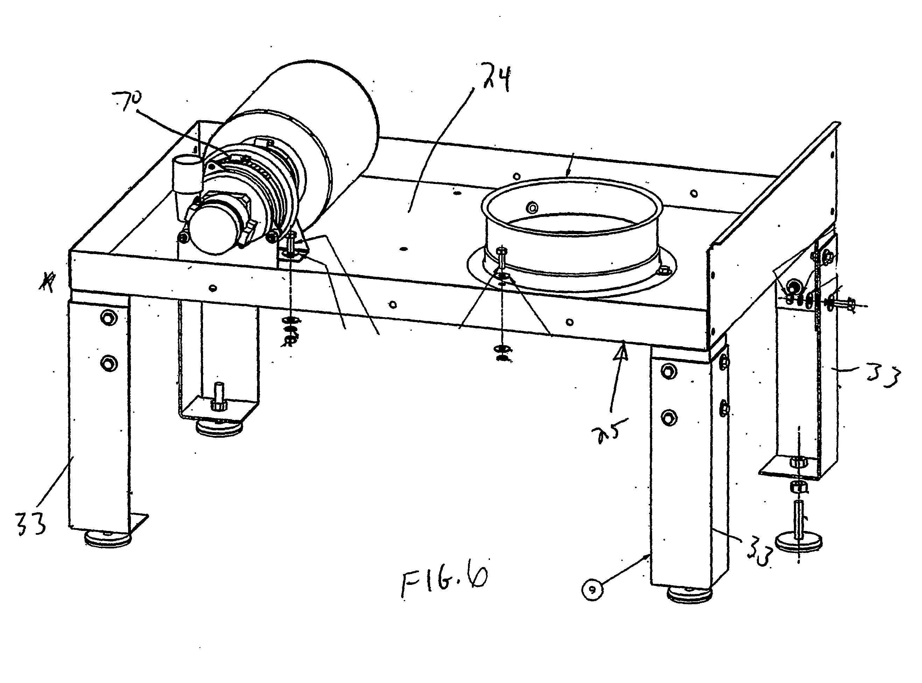

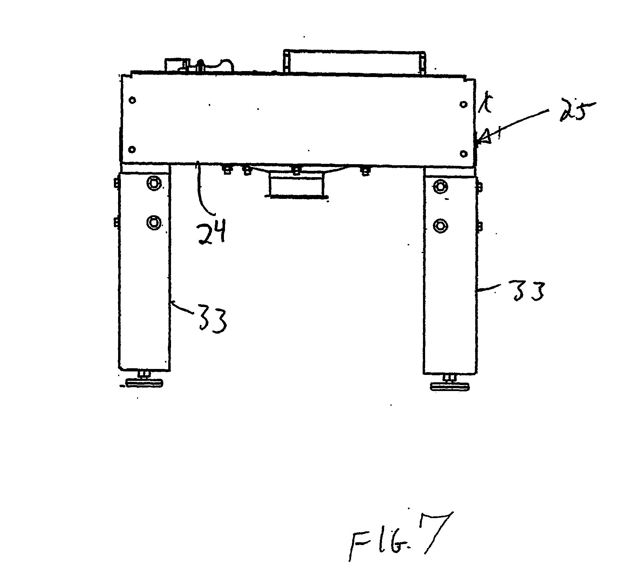

Figures 1 and 2 illustrate a cleaner 20 having features that are examples of inventive aspects in accordance with the principles of the present disclosure. The cleaner 20 includes a cabinet 21 having a rectangular housing 22 supported on legs 33 that elevate the housing 22 above the ground. The legs 33 and a bottom wall 24 of the housing 22 cooperate to form a base assembly 25 (see Figure 6 and 7) of the cabinet 21. The front of the cabinet 21 includes a door 40 that can be opened to provide access to the interior of the housing 22. An, ash collection container 42 is mounted under the housing 22 for collecting ash that drops from the DPF's as the DPF's are cleaned. A vent stack 44 is mounted at the top of the housing 22 for venting the products of combustion from the housing 22.

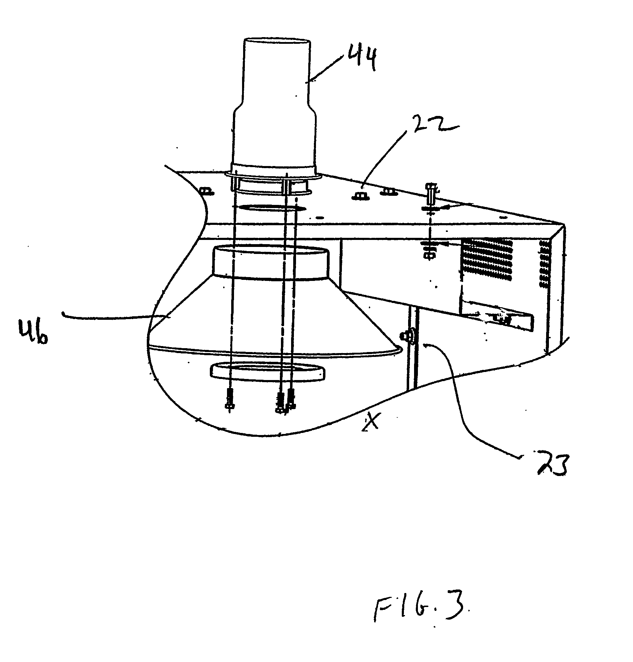

Referring to Figure 3, the vent stack 44 is in fluid communication with a fume and heat containment chamber 23 within the interior of the housing 22. The vent stack 44 is part of an assembly including a hood 46. The hood 46 is mounted beneath the vent stack 42 within the chamber 23.

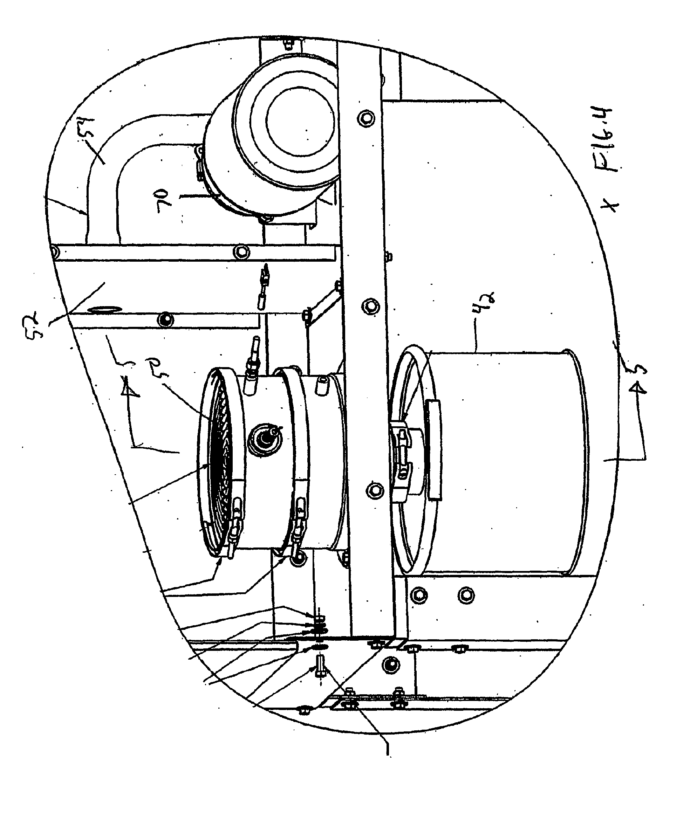

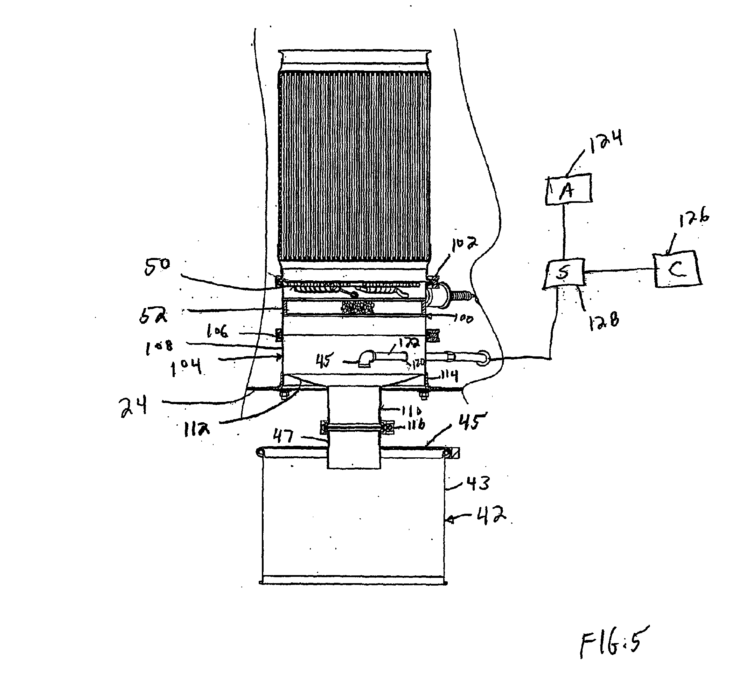

Referring to Figures 4 and 5, a heating element 50 (e.g., an electric heating element (e.g., a coil, grid or other structure) or other heating structure) is mounted in the chamber 23 adjacent the bottom wall 24 of the housing 22. A heat reflector 52 (e.g., a porous ceramic disc/plate) is mounted beneath the heating element 50. Preferably, the reflector 52 is sufficiently porous to readily allow air and ash to pass therethrough. In one embodiment, the reflector 52 includes 5-25 pores per 2,54 cm (inch) and has a thickness in the range of 12,7 - 50,8 mm (0.5-2 inches). The reflector 52 prevents radiant heat loss into the ash container since air flow through the reflector 52 carries heat from the reflector upwardly to the diesel particulate filter being serviced.

The heating element 50 and the reflector 52 are mounted within a cylindrical first pipe section 100 having flanged upper and lower ends. The flanged upper end allows an aftertreatment device to be clamped in place (e.g., with v-band clamp 102) over the heating element 50- The lower flanged end of the first pipe sections 100 is clamped to the upper flanged end of a second pipe section 104 (e.g., with v-baned clamp 106). The second pipe section 104 includes an enlarged diameter portion 108 connected to a reduced diameter portion 110 by a conical diameter transition portion 112. The second pipe section 104 is secured (e.g., welded or fastened) to a rim 114 secured to the bottom wall 24 of the cabinet 21. The reduced diameter portion 110 of the second pipe section 104 projects downwardly below the bottom wall 24 and has a flanged lower end.

The ash collection container 42 is clamped (e.g., with v-band clamp 116) to the lower flanged end of the second pipe section 104. The ash collection, container 42 includes a main bin 43 having an open top end covered by a lid 45. A pipe section 47 is mounted at the center of the lid 45. The pipe section 47 extends though the lid 45 and has a flanged upper end that can be clamped to the lower flanged end of the second pipe section 104. The lid 45 is removable from the bin 43 to allow ash to be emptied from the bin 43.

A compressed air outlet 45 (e.g., a nozzle, hose, pipe, of other structure) is positioned between the reflector 52 and the container 42. For example, in Figure 5, the outlet 45 is shown connected to a compressed air line 122 that extends through an opening 120 in the second pipe section 104, In the depicted embodiment, the outlet 45 is configured to direct air in a downward direction toward the container 42. In other embodiments, the outlet may direct air upwardly toward the heating element or laterally toward the side wall of the second pipe section 104.

It is preferred of the outlet 45 to be in fluid communication with a source of compressed air 124 via the line 122. A controller 126 controls the amount of air provided to the outlet 45. The flow can be controlled/metered to control the rate of combustion at the aftertreatment device being serviced. In one embodiment, the controlled interfaces with a solenoid 128 that opens and closes to provide pulses of air to the outlet 45. In one embodiment, the source of compressed air has a pressure of at least 60 pounds per square inch (psi), or in the range of 4,1-6,9 bar (60-100 psi), or preferably about 90 psi. In another embodiment, flow rates preferably in the range of 14,2 - 56,6 Ndm³ (0.5-2.0 standard cubic feet per minute (SCFM)) are provided beneath the heating element during regeneration. In still another embodiment, pulses having durations in the range of .25-1 s, a pulse frequency of about 2-15 or 2-8 pulses per minute, and a flow rate in the range of 14,2 - 70.6 or 21.2 - 35,4 Ndm³ (0.5-2.5 SCFM or .75-1.25 SCFM) are provided beneath the heating element. It will be appreciated that the above numerical information is provided for illustration purposes only, and is not intended to limit the broad inventive aspects of the present disclosure.

The pulses of air provide a number of functions. For example, the air pulses impinge on the aftertreatment device causing soot and ash packed on the device to be dislodged and to fall into the container 42. The upward flow of air also carries and distributes heat evenly through the aftertreatment device. By controlling the air flow rate, the amount of oxygen supplied to the aftertreatment device can also be controlled to control the core temperature and combustion rate. In a preferred embodiment, the high pressure air pulse can penetrate soot built-up on the diesel particulate filter.

A blower 70 or fan is also mounted in the housing 22. A wall 52 (see Figure 4) separates the blower 50 from the chamber 23. A hose 54 provides fluid communication between the blower 50 and the interior of the main chamber. The blower 70 forces air into the main chamber to facilitate venting the products of combustion from the chamber.

In use of the system, the front door 40 of the cabinet is opened to provide access to the chamber 23. With the door open 40, a diesel particulate filter (DPF) can be mounted (e.g., clamped or otherwise secured) on top of the heating element. Preferably, the DPF is mounted with the inlet side facing downwardly and the outlet side facing upwardly. Once the DPF is in place, the door 40 is closed and the heating element is activated to heat the core of the DPF to a temperature suitable for combusting ash on the DPF (e.g. 482 - 816 °C (900-1500 F). During an initial warm-up period (e.g., about 20 minutes), the heating element is activated. During this warn up period, it is preferred to not provide air pulses to the system so that more uniform radiant heating is provided across the entire face of the core being serviced. Uniform heating prevents preferential air flow paths from developing in the DPF that may interfere with the ability to uniformly regenerate the entire DPF. After the warm-up period, the air outlet 45 begins to direct pulses of air downwardly into the container 42 (e.g., at a pulse rate of .5 seconds on and 15 seconds off). The pulses of air reflect off the container 42 and migrate upwardly through the heat reflector 52, the heating element 50 and the DPF mounted on the heating element 50. The pulses of air assist in providing uniform combustion temperatures across the entire volume of the DPF while maintaining a controlled combustion. The pulses of air also assist is dislodging ash from the DPF during the combustion process. The ash falls downwardly from the DPF through the heating element 50 and the heat reflector 52 and is collected in the container 42. The container 42 is preferably periodically disconnected from the cabinet to be emptied.

After the combustion process has been completed (e.g., about 3-5 hours), the heating element 50 turfed off and the air flow is increased during the cool-down. In one embodiment, the flow rate is increased to at least 1.5 times the regeneration air flow rate. For example, the pulse rate can be increased to .5 second on and 4-10 s or 7.5 to 10 seconds off). The cool-down period can often extend for 2-3 hours. After the heating element and cabinet interior cool to a predetermined temperature (e.g. 60°C (140 F), the front door 40 can be opened to remove the clean DPF. Thereafter, another DPF can be mounted on the heating element 50 and the process can be repeated.

During heating, if the heating element fails (e.g., a heating controller does not modulate), the solenoid fails (e.g., sticks open or closed), or the cabinet temperature exceeds a predetermined temperature, the system can be programmed to abort the regeneration cycle.

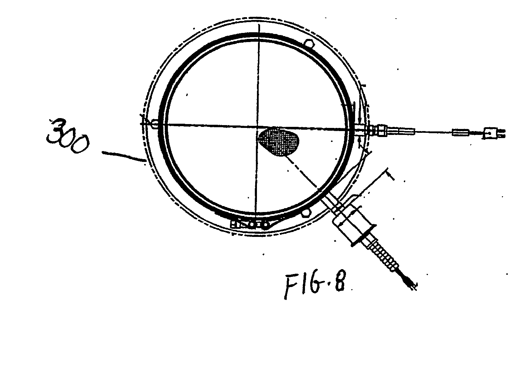

To make the process more efficient, the DPF, the pipe sections 100, 104 and the ash container 42 can be covered with insulating layers (e.g., heat shields, blankets, sheaths, etc.) For example, Figure 8 schematically shows an insulation sheath/blanket 300 wrapped around the DPF and the pipe sections 100,104.

To improve cleaning, the combustion type cleaner disclosed herein can be used in combination with a pulse cleaner of the type disclose at EP 1 698 765 A1. For example, after soot has been combusted from an aftertreatment device with the heat cleaner of the present disclosure, the aftertreatment device can then be placed in a pulse cleaner to remove any residual ash.

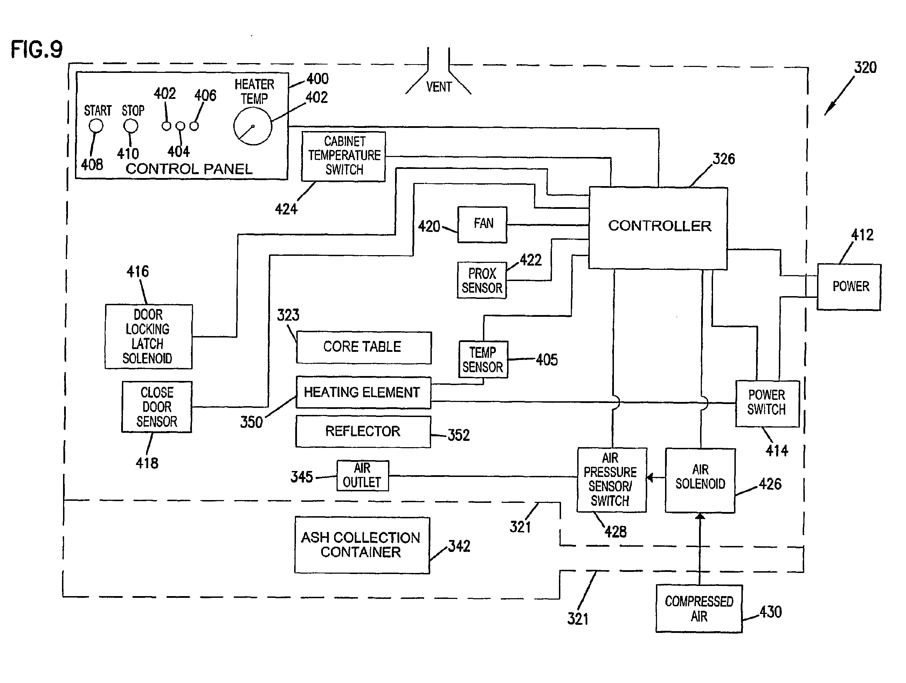

Figure 9 schematically shows an example control system for a heat cleaner 320 in accordance with the principles of the present disclosure. The heat cleaner 320 includes a cabinet 321 housing a platform/table 323 for mounting a DPF, a heating element 350 mounted at a central opening of the table 323, a reflector 352 mounted below the heating element. 350, an ash collection container 342 positioned below the reflector 352, and a compressed air outlet 345 for providing pulses of air that move through the DPF during heating. The control system includes a main controller 326 that interfaces with the various control components of the heater. The controller 326 can include a microprocessor, memory, output drivers and an analog to digital converter and other components conventionally found in a controller. The memory can be used to store software/firmware for use controlling a visual display (e.g., at a front of the cabinet) and for the overall control of the module.

Referring to still to Figure 9, the control system includes a front control panel 400 having a visual display and also having buttons for controlling operation of the heat cleaner 320. The visual display includes a temperature gage 402 that shows the temperature of the heating element 350. The visual display also includes a light 402 that is illuminated during heating, a light 404 that is illuminated during cool-down, and a light 406 that illuminates when a cleaning operation has been completed. The front control panel 400 further includes a start button 408 that an operator can depress to start a heating operation, and an emergency stop bottom 410 that an operator can depress to stop a heating operation at any time. A plurality of wires can be used to electrically connect the components of the front panel 400 to the controller 326.

The controller interfaces with a temperature sensor 405 (e.g., a thermocouple or thermometer) provided at the heating element 350 to access temperature readings corresponding to the temperature of the heating element 350. The controller 326 uses the temperature readings to control the temperature gage 402- If the temperature of the heating element 350 exceeds a predetermined limit, the controller 326 can terminate heating operations by disconnecting the heating element 350 from its power supply 412 (e.g., via power switch 414).

The controller 326 further interfaces with an electronic latch 416 (e.g., a solenoid of other structure), a door sensor 418 (e.g., a push switch or other structure), a fan 420, an aftertreatment device sensor 422 (e.g., a proximity sensor or other device for detecting the presence of an aftertreatment device above the heating element) and a cabinet temperature sensor 224 (e.g., a thermometer, temperature switch or other structure for providing feedback regarding temperature). The electronic latch 416 prevents the cabinet door from being opened during heating operations. If it is necessary to open the cabinet door during heating operations, the emergency stop button 410 can be pressed to stop heating operations and override the latch 416. The door sensor 418 senses whether the cabinet door is opened or closed. The controller 326 will not begin a heating operation unless the cabinet door is closed. The fan 420 provides air for exhausting/ventilating the cabinet 321. The sensor 422 senses whether a DPF is in position over the heating element 350. If the sensor 422 does not detect the presence of a DPF, the controller will not allow a heating operation to take place. The controller also will terminate heating operations if the cabinet temperature exceeds a predetermined limit as indicated by the cabinet temperature sensor 424.

The controller 326 also interfaces with a solenoid 426 and an air pressure sensor 428. The solenoid 426 receives compressed air from a source of compressed air 430, and is used by the controller 326 to control the pulses (e.g., duration and timing) of air provided to the compressed air outlet 345. The pressure sensor 428 reads whether sufficient pressure is being provided to the solenoid. If sufficient pressure is not present, the controller will either terminate heating operations if heating operations are ongoing, or will prevent heating operations from being started.

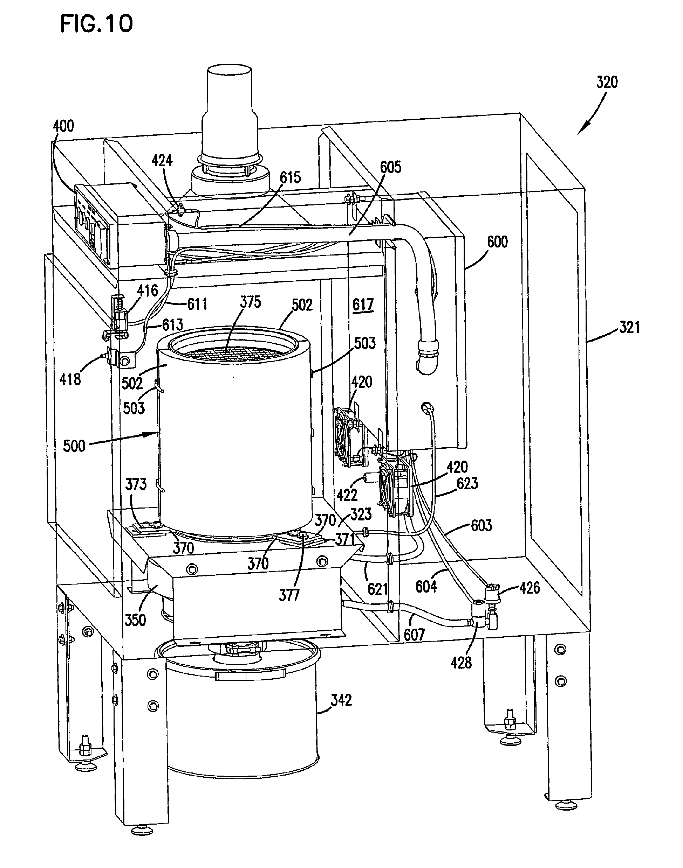

Figure 10 is a perspective view of a heat cleaner 320 including the control system of Figure 9. The cleaner 320 includes cabinet 321, DPF mounting table 323, heating element 350 and ash collection container 342. The DPF mounting table 323 has a central opening at which the heating element is positioned. A DPF retaining arrangement is provided at the top of the table 323. The retaining arrangement includes three sets of slide locks/bars (only two sets are visible) secured to the table 323 by fasteners (e.g., bolts). Each set of slide bars includes an upper bar 370 and a lower bar 371. The sets of slide bars 370 are spaced at about 120 degree increments about the heating element 350. The upper slide bars 370 have elongated holes 373 for receiving fasteners 377. By loosening the fasteners, the upper bars 370 can be slid back away from the heating element 350 along the top sides of the bars 371 to allow a DPF 375 to be placed on top of the heating element 350. Once the DPF 375 is in place, the upper slide bars 370 can be slid toward the DPF to position where the bars 370 overlap the lower flange of the DPF 375. The slide bars 370 can then be tightened down with the fasteners 377 such that the bars 370 firmly clamp the DPF 375 in place against the top side of the heating element 350.

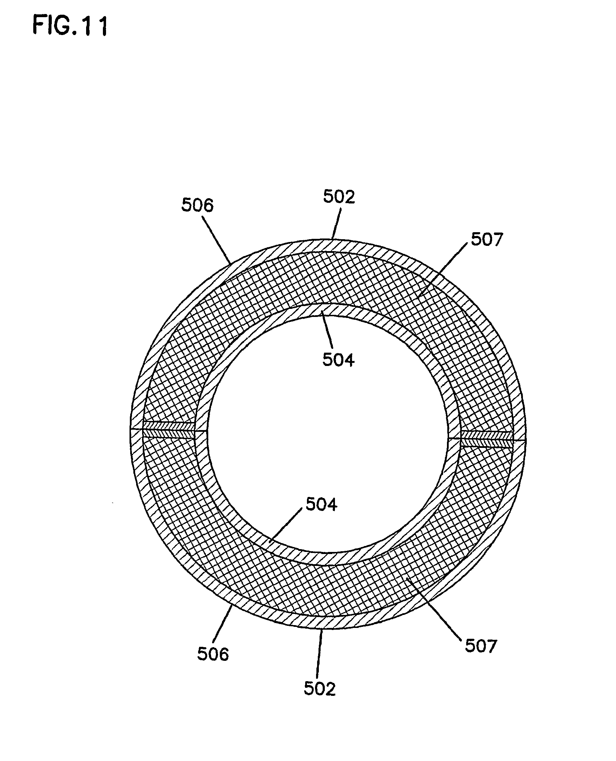

Referring still to FIG. 10, the system also includes an insulating sleeve 500 mounted about the DPF 375 to retain heat therein. The sleeve includes two half-cylinders 502 that are held together by mechanical latches 503, hooks or other structures. The half-cylinders 502 include an insulating material 507 (e.g., fiberglass) positioned between inner and outer layers 504, 506 of metal (see Figure 11). By unhooking the latches 503, the half-cylinders 502 can be separated from one another and placed about the DPF. 375. The latches 503 can then be re-attached to hold the sleeve 500 about the DPF 375.

Referring again to FIG. 10, the heat cleaner 320 includes a rear control box 600 in which the controller 326 is positioned. Wires 603, 604 connect the controller respectively to the solenoid 426 and the pressure sensor 428. The solenoid 426 and the pressure sensor 428 are mounted to the floor of the cabinet 321. The source of compressed air connects to the solenoid 426 through the floor of the cabinet 321. A hose 607 carries compressed air from the pressure sensor 428 to the compressed air outlet 345.

As shown at FIG. 10, the front control panel 400 is positioned at the front of the cabinet 321. A conduit 605 is used to carry wires that interconnect the front panel 400 to the controller 326. The door latch 416 and the door sensor 418 are also positioned adjacent the front of the cabinet 321. Wires 611, 613 respectively connect the door latch 416 and the door sensor 418 to the controller 326. The cabinet temperature sensor 424 is mounted adjacent the top of the cabinet 321 and is connected to the controller 326 by wire 615. Fans 420 and an aftertreatment device sensor 422 are mounted to a divider wall 617 that separates the cabinet 321 into a DPF cleaning chamber and a control chamber. The control box 600, the solenoid 428 and the pressure switch 428 are positioned within the control chamber. FIG. 10 also shows a wire 621 for providing power to the heating element 350, and a wire for 623 for allowing the controller 326 to take readings from the temperature sensor 405.

It will be appreciated that the same types of heating and cooling cycles/processes described with respect to the embodiment of Figure 5 can also be used in combination with the heat cleaner of Figure 10.

The above specification provides examples of how certain inventive aspects may be put into practice. It will be appreciated that the inventive aspects can be practiced in other ways than those specifically shown and described herein without departing from the scope of the claims.

## Claims

1. An apparatus (20) for combusting soot from a diesel engine exhaust aftertreatment device (375), the apparatus comprising:
(a) a cabinet (21) having a housing (22), the cabinet including a door (40) that can be opened to provide access to an interior of the housing for removably mounting the diesel engine exhaust aftertreatment device within the housing after the diesel engine exhaust aftertreatment device has been removed from a corresponding exhaust system;
(b) a heating element (50) positioned within the housing of the cabinet;
(c) a mounting arrangement for securing the diesel engine exhaust aftertreatment device above the heating element; and
(d) an ash collection container (42) mounted beneath a floor (24) of the housing for collecting ash that falls from the diesel engine exhaust aftertreatment device during heating.

2. The apparatus of claim 1, further comprising a pulse generator (128) for directing pulses of air to a location beneath the heating element.

3. The apparatus of claim 1, further comprising a porous heat reflector (52) positioned beneath the heating element at a location between the heating element and the ash collection container.

4. The apparatus of claim 2 or 3, wherein the pulse generator includes a nozzle (45) positioned between the heating element and the ash collection container that directs the pulse of air downwardly toward the ash collection container.

5. The apparatus of claims 4, wherein the nozzle (45) is positioned between the heat reflector and the ash collection container.

6. The apparatus of claim 1, further comprising a vent (44) for venting products of combustion from the housing.

7. The apparatus of claim 6, further comprising a blower (70) for facilitating venting the products of combustion through the vent.

8. The apparatus of claim 1, comprising a sensor (418) for detecting if said door (40) is opened.

9. The apparatus of claim 8, further comprising a controller (326) that prevents the heating element from being heated if the door is open.

10. The apparatus of claim 1, comprising and electronic latch (416) that prevents the door from being opened when the heating element is hot.

11. The apparatus of claim 10, further comprising a stop button (410) for deactivating the heating element and for deactivating the electronic latch.

12. The apparatus of claim 1, further comprising a cabinet temperature sensor (224) for sensing a temperature within the housing, wherein the heating element is deactivated if a temperature in the housing exceeds a predetermined temperature value.

13. The apparatus of claim 1, further comprising a heating element temperature sensor (405) for sensing a temperature of the heating element.

14. The apparatus of claim 13, wherein the apparatus deactivates the heating element if the heating element exceeds a predetermined temperature.

15. The apparatus of claim 13, further comprising a temperature gage (402) for displaying the temperature of the heating element.

16. The apparatus of claim 1, further comprising a fan (420) for facilitating venting the products of combustion through the vent.

17. The apparatus of claim 1, further comprising an aftertreatment device sensor (422) for sensing whether an aftertreatment device is present above the heating element.

18. The apparatus of claim 1, further comprising a slide lock arrangement for securing the aftertreatment device above the heating element.

19. The apparatus of claim 18, further comprising a platform (323) positioned within the housing, wherein the slide lock arrangement includes a plurality of slide bars (370, 371) mounted to the platform, the slide bars being slideable between first positions in which the slide bars are adapted to engage a lower flange of the aftertreatment device to secure the aftertreatment device in place above the heating element, and second positions where the slide bars are spaced from the lower flange.

20. The apparatus of claim 1, further comprising an insulating component (500) for insulating the aftertreatment device, the insulating component including an insulating layer positioned between inner an outer metal layers.

21. The apparatus of claim 20, wherein the insulating component includes first and second half-cylinders (502).

22. A method for cleaning a diesel engine exhaust aftertreatment device (375) comprising:
(a) removing the aftertreatment device from a corresponding exhaust system;
(b) positioning the aftertreatment device over a heating element;
(c) heating the aftertreatment device with the heating element to burn soot on the aftertreatment device;
(d) providing a controlled amount of air that flows upwardly against the direction of gravity through the aftertreatment device during heating;
(e) cooling the aftertreatment device by turning off the heating element and increasing the amount of air that flows upwardly against the direction of gravity through the aftertreatment device;
(f) moving the aftertreatment device away from the heating element ; and
(g) remounting the diesel engine exhaust aftertreatment device to the corresponding exhaust system.

23. The method of claim 22, wherein the air is provided by providing pulses of air move upwardly against the direction of gravity through the aftertreatment device.

24. A method of combusting soot from a diesel engine exhaust aftertreatment device using the apparatus of claim 1, the method comprising:
(a) removing the diesel engine exhaust aftertreatment device from the corresponding exhaust system:
(b) opening the door of the cabinet to provide access to the interior of the housing:
(c) mounting the diesel engine exhaust aftertreatment device above the heating element within the housing;
(d) heating the diesel engine exhaust aftertreatment device with the heating element;
(e) removing the diesel engine exhaust aftertreatment device from the housing; and
(f) remounting the diesel engine exhaust aftertreatment device to the corresponding exhaust system.

## Patentansprüche

1. Vorrichtung (20) zum Verbrennen von Russ aus einem Abgas-Nachbehandlungs-Aggregat (375) eines Dieselmotors, **gekennzeichnet durch**:
(a) eine Kammer (21) mit einem Gehäuse (22), wobei die Kammer (21) eine Tür (40) besitzt, die geöffnet werden kann, um Zugang zu einem Innenraum des Gehäuses (22) zu ermöglichen, um das Abgas-Nachbehandlungs-Aggregat (375) des Dieselmotors ausbaubar in das Gehäuse (22) einzusetzen, nachdem das Abgas-Nachbehandlungs-Aggregat des Dieselmotors aus dem zugeordneten Abgassystem ausgebaut worden ist;
(b) ein Heizelement (50), das in dem Gehäuse (22) der Kammer (21) angeordnet worden ist;
(c) eine Aufnahmevorrichtung (102) zur Befestigung des Abgas-Nachbehandlungs-Aggregates (375) des Dieselmotors über dem Heizelement (50); und
(d) einen Aschesammelbehälter (42), der unterhalb eines Bodens (24) des Gehäuses (22) zur Aufnahme von Asche angeordnet ist, die von dem Abgas-Nachbehandlungs-Aggregat (375) des Dieselmotors während des Beheizens herunter fällt.

2. Vorrichtung nach Anspruch 1 ferner **gekennzeichnet durch** einen Impulsgenerator (128) zum richten von Luftimpulsen auf eine Stelle unterhalb des Heizelementes (50).

3. Vorrichtung nach Anspruch 1 ferner **gekennzeichnet durch** einen porösen Wärmereflektor (52) der unterhalb des Heizelementes (50) in einer Position zwischen dem Heizelement (50) und dem Aschesammelbehälter (42) angeordnet ist.

4. Vorrichtung nach einem der Ansprüche 2 oder 3 **dadurch gekennzeichnet, dass** der Impulsgenerator (128) eine Düse (45) besitzt, die zwischen dem Heizelement (50) und dem Aschesammelbehälter (42) angeordnet ist, und die Luftimpulse abwärts in Richtung auf den Aschesammelbehälter (42) richtet.

5. Vorrichtung nach Anspruch 4 **dadurch gekennzeichnet, dass** die Düse (45) zwischen dem Wärmereflektor (52) und dem Aschesammelbehälter (42) angeordnet ist.

6. Vorrichtung nach Anspruch 1 ferner **gekennzeichnet durch** einen Abzug (44) zum Abführen von Verbrennungsprodukten aus dem Gehäuse (22).

7. Vorrichtung nach Anspruch 6 ferner **gekennzeichnet durch** ein Gebläse oder Ventilator (70) zum Absaugen der Verbrennungsprodukte **durch** den Abzug (44).

8. Vorrichtung nach Anspruch 1 **gekennzeichnet durch** einen Sensor (418), um festzustellen, ob Tür (40) geöffnet ist.

9. Vorrichtung nach Anspruch 8 ferner **gekennzeichnet durch** eine Steuerung (326), der verhindert, dass das Heizelement (50) beheizt wird, wenn die Tür (40) offen ist.

10. Vorrichtung nach Anspruch 1 **gekennzeichnet durch** eine elektronische Verriegelung (416), die verhindert, dass die Tür (40) geöffnet wird, wenn das Heizelement (50) heiss ist.

11. Vorrichtung nach Anspruch 10 ferner **gekennzeichnet durch** eine Stoptaste (410) zur Deaktivierung des Heizelementes (50) und zur Deaktivierung der elektronischen Verriegelung (416).

12. Vorrichtung nach Anspruch 1 ferner **gekennzeichnet durch** einen Kammer-Temperatur-Sensor (224) zur Überwachung einer Temperatur in dem Gehäuse (22), wobei das Heizelement (50) deaktiviert wird, wenn eine Temperatur in dem Gehäuse (22) einen vorgegebenen Temperaturwert überschreitet.

13. Vorrichtung gemäß Anspruch 1 ferner **gekennzeichnet durch** einen Heizelement-Temperatur-Sensor (405) zur Überwachung einer Temperatur des Heizelementes (50).

14. Vorrichtung nach Anspruch 13 **dadurch gekennzeichnet, dass** die Vorrichtung (20) bzw. die Steuerung (326) das Heizelement (50) deaktiviert, wenn das Heizelement (50) eine vorgegebene Temperatur überschreitet.

15. Vorrichtung nach Anspruch 13 ferner **gekennzeichnet durch** eine Temperaturanzeige (402) zum Anzeigen der Temperatur des Heizelementes (50).

16. Vorrichtung nach Anspruch 1 ferner **gekennzeichnet durch** einen Ventilator (420) zum Abzug der Verbrennungsprodukte **durch** den Abzug (44).

17. Vorrichtung nach Anspruch 1 ferner **gekennzeichnet durch** einen Nachbehandlungs-Aggregat-Sensor (422), der feststellt, ob ein Nachbehandlungs-Aggregat (375) über dem Heizelement (50) eingesetzt ist.

18. Vorrichtung nach Anspruch 1 ferner **gekennzeichnet durch** eine Verschluss-Sicherung (370, 371) zur Befestigung des Abgas-Nachbehandlungs-Aggregates (375) oberhalb des Heizelementes (50).

19. Vorrichtung nach Anspruch 18 ferner **gekennzeichnet durch** eine Platte (323), die in dem Gehäuse (22) angeordnet ist, wobei die Verschluss-Sicherung (370, 371) mehrere Gleitschienen (370, 371) besitzt, die an der Platte (323) befestigt sind, wobei die Gleitschienen (370, 371) zwischen ersten Positionen, in denen die Gleitschienen (370, 371) geeignet sind, mit dem unteren Flansch des Nachbehandlungs-Aggregates (375) in Eingriff zu kommen, um, das Nachbehandlungs-Aggregat (375) in einer Position oberhalb des Heizelementes (50) zu befestigen, und zweiten Positionen, in denen die Gleitschienen (370, 371) mit Abstand von dem unteren Flansch angeordnet sind.

20. Vorrichtung nach Anspruch 1 ferner **gekennzeichnet durch** ein Isolierungselement (500) zur Isolierung des Nachbehandlungs-Aggregates (375), wobei das Isolierungselement (500) eine Isolierschicht (507) besitzt, die zwischen einer inneren Metallschicht (502) und einer äusseren Metallschicht (504) angeordnet ist.

21. Vorrichtung nach Anspruch 20 **dadurch gekennzeichnet, dass** das Isolierungselement (500) einen ersten und einen zweiten Halbzylinder (502) besitzt.

22. Verfahren zum Reinigen eines Abgas-Nachbehandlungs-Aggregates (375) eine Dieselmotors **gekennzeichnet durch** die Verfahrensschritte:
(a) Ausbauen des Nachbehandlungs-Aggregates (375) aus einem zugehörigen;
(b) Positionierung des Nachbehandlungs-Aggregates (375) über einem Heizelement (50);
(c) Beheizen des Nachbehandlungs-Aggregates (375) mit dem Heizelement (50), um Ruß auf dem Nachbehandlungs-Aggregat (375) zu verbrennen;
(d) Zuführung einer geregelten Luftmenge, die während des Beheizens entgegen der Wirkungsrichtung der Schwerkraft aufwärts **durch** das Nachbehandlungs-Aggregat (375) strömt;
(e) Abkühlung des Nachbehandlungs-Aggregates (375) **durch** Abstellen des Heizelementes (50) und Erhöhen der Luftmenge, die entgegen der Wirkungsrichtung der Schwerkraft aufwärts **durch** das Nachbehandlungs-Aggregat (375) strömt;
(f) Entfernen des Nachbehandlungs-Aggregates (375) von dem Heizelement (50) weg;
(g) Wiedereinbau des Nachbehandlungs-Aggregates (375) des Dieselmotors in das zugeordnete Abgassystem.

23. Verfahren nach Anspruch 22 **dadurch gekennzeichnet, dass** zur Zuführung der Luft Luftimpulse erzeugt werden, die entgegen der Wirkungsrichtung der Schwerkraft aufwärts durch das Nachbehandlungs-Aggregat (375) strömen.

24. Verfahren zum Verbrennen von Ruß eines Abgas-Nachbehandlungs-Aggregates (375) unter Verwendung der Vorrichtung nach Anspruch 1 **gekennzeichnet durch** die Verfahrensschritte:
a) Entfernen des Abgas-Nachbehandlungs-Aggregates (375) des Dieselmotors aus dem zugeordneten Abgassystem;
b) Öffnen der Tür (40) der Kammer (21), um Zugang zu dem Innenraum des Gehäuses (22) zu ermöglichen:
c) Einsetzen des Abgas-Nachbehandlungs-Aggregates (375) des Dieselmotors über dem Heizelement (50) in dem Gehäuse (22);
d) Beheizen des Abgas-Nachbehandlungs-Aggregates (375) des Dieselmotors mit dem Heizelement (50);
e) Entfernen des Abgas-Nachbehandlungs-Aggregates (375) des Dieselmotors aus dem Gehäuse (22); und
f) Wiedereinbau des Abgas-Nachbehandlungs-Aggregates (375) des Dieselmotors in das zugeordnete Abgassystem.

## Revendications

1. Appareil (20) pour brûler la suie provenant d'un dispositif de post-traitement d'échappement de moteur diesel (375), l'appareil comprenant :
(a) un coffret (21) ayant un boîtier (22), le coffret comprenant une porte (40) qui peut être ouverte pour fournir l'accès à un intérieur du boîtier pour monter de manière amovible le dispositif de post-traitement d'échappement de moteur diesel à l'intérieur du boîtier après que le dispositif de post-traitement d'échappement de moteur diesel a été retiré d'un système d'échappement correspondant ;
(b) un élément chauffant (50) positionné à l'intérieur du boîtier du coffret ;
(c) un agencement de montage pour fixer le dispositif de post-traitement d'échappement de moteur diesel au-dessus de l'élément chauffant ; et
(d) un récipient de collecte de cendres (42) monté au-dessous d'un plancher (24) du boîtier pour collecter les cendres qui tombent du dispositif de post-traitement d'échappement de moteur diesel pendant le chauffage.

2. Appareil selon la revendication 1, comprenant en outre un générateur d'impulsions (128) pour diriger les impulsions d'air vers un emplacement situé au-dessous de l'élément chauffant.

3. Appareil selon la revendication 1, comprenant en outre un réflecteur de chaleur poreux (52) positionné au-dessous de l'élément chauffant à un emplacement situé entre l'élément chauffant et le récipient de collecte de cendres.

4. Appareil selon la revendication 2 ou 3, dans lequel le générateur d'impulsion comprend une buse (45) positionnée entre l'élément chauffant et le récipient de collecte de cendres qui dirige l'impulsion d'air vers le bas vers le récipient de collecte de cendres.

5. Appareil selon les revendications 4, dans lequel la buse (45) est positionnée entre le réflecteur de chaleur et le récipient de collecte de cendres.

6. Appareil selon la revendication 1, comprenant en outre une évacuation (44) pour évacuer les produits de combustion du boîtier.

7. Appareil selon la revendication 6, comprenant en outre une soufflante (70) pour faciliter l'évacuation des produits de combustion à travers l'évacuation.

8. Appareil selon la revendication 1, comprenant un capteur (418) pour détecter si ladite porte (40) est ouverte.

9. Appareil selon la revendication 8, comprenant en outre un contrôleur (326) qui empêche le chauffage de l'élément chauffant si la porte est ouverte.

10. Appareil selon la revendication 1, comprenant un verrou électronique (416) qui empêche l'ouverture de la porte lorsque l'élément chauffant est chaud.

11. Appareil selon la revendication 10, comprenant en outre un bouton d'arrêt (410) pour désactiver l'élément chauffant et pour désactiver le verrou électronique.

12. Appareil selon la revendication 1, comprenant en outre un capteur de température de coffret (224) pour détecter une température à l'intérieur du boîtier, dans lequel l'élément chauffant est désactivé si une température dans le boîtier dépasse une valeur de température prédéterminée.

13. Appareil selon la revendication 1, comprenant en outre un capteur de température d'élément chauffant (405) pour détecter une température de l'élément chauffant.

14. Appareil selon la revendication 13, dans lequel l'appareil désactive l'élément chauffant si l'élément chauffant dépasse une température prédéterminée.

15. Appareil selon la revendication 13, comprenant en outre une jauge de température (402) pour afficher la température de l'élément chauffant.

16. Appareil selon la revendication 1, comprenant en outre un ventilateur (420) pour faciliter l'évacuation des produits de combustion à travers l'évacuation.

17. Appareil selon la revendication 1, comprenant en outre, un capteur de dispositif de post-traitement (422) pour détecter si un dispositif de post-traitement est présent au-dessus de l'élément chauffant.

18. Appareil selon la revendication 1, comprenant en outre un agencement de blocage coulissant pour fixer le dispositif de post-traitement au-dessus de l'élément chauffant.

19. Appareil selon la revendication 18, comprenant en outre une plateforme (323) positionnée à l'intérieur du boîtier, dans lequel l'agencement de blocage coulissant comprend une pluralité de barres coulissantes (370, 371) montée sur la plateforme, les barres coulissantes pouvant coulisser entre des premières positions dans lesquelles les barres coulissantes sont adaptées pour mettre en prise un rebord inférieur du dispositif de post-traitement afin de fixer le dispositif de post-traitement en place au-dessus de l'élément chauffant et des secondes positions dans lesquelles les barres coulissantes sont espacées du rebord inférieur,

20. Appareil selon la revendication 1, comprenant en outre un composant isolant (500) pour isoler le dispositif de post-traitement, le composant isolant comprenant une couche isolante positionnée entre des couches métalliques interne et externe.

21. Appareil selon la revendication 20, dans lequel le composant isolant comprend des premier et second demi cylindres (502).

22. Procédé pour nettoyer un dispositif de post-traitement d'échappement de moteur diesel (375) comprenant les étapes consistant à :
(a) retirer le dispositif de post-traitement d'un système d'échappement correspondant ;
(b) positionner le dispositif de post-traitement sur un élément chauffant ;
(c) chauffer le dispositif de post-traitement avec l'élément chauffant pour brûler la suie sur le dispositif de post-traitement ;
(d) prévoir une quantité contrôlée d'air qui s'écoule vers le haut, contre le sens de la gravité, à travers le dispositif de post-traitement pendant le chauffage ;
(e) refroidir le dispositif de post-traitement en arrêtant l'élément chauffant et en augmentant la quantité d'air qui s'écoule vers le haut, contre le sens de la gravité, à travers le dispositif de post-traitement ;
(f) déplacer le dispositif de post-traitement à distance de l'élément chauffant ; et
(g) remonter le dispositif de post-traitement d'échappement de moteur diesel sur le système d'échappement correspondant.

23. Procédé selon la revendication 22, dans lequel l'air est fourni en prévoyant que des impulsions d'air se déplacent vers le haut, contre le sens de la gravité, à travers le dispositif de post-traitement,

24. Procédé pour brûler la suie provenant d'un dispositif de post-traitement d'échappement de moteur diesel utilisant l'appareil de la revendication 1, le procédé comprenant les étapes consistant à :
(a) retirer le dispositif de post-traitement d'échappement de moteur diesel du système d'échappement correspondant ;
(b) ouvrir la porte du coffret pour fournir l'accès à l'intérieur du boîtier ;
(c) monter le dispositif de post-traitement d'échappement de moteur diesel au-dessus de l'élément chauffant à l'intérieur du boîtier ;
(d) chauffer le dispositif de post-traitement d'échappement de moteur diesel avec l'élément de chauffage ;
(e) retirer le dispositif de post-traitement d'échappement de moteur diesel du boîtier ; et
(f) remonter le dispositif de post-traitement d'échappement de moteur diesel sur le système d'échappement correspondant.
